# EUROPEAN PATENT APPLICATION

(11) **EP 4 542 497 A1**
(43) Date of publication of application: **23.04.2025**
(21) Application number: 24201932.1
(22) Date of filing: 23.09.2024
(51) Int. Cl.: G06T 13/40, A63F 13/79

(54) **PERSONALITY MASKS FOR VIRTUAL REALITY AVATARS**

(30) Priority: 20.10.2023 US 202363591983 P; 13.09.2024 US 202418885371
(71) Applicant: Meta Platforms Technologies, LLC, Menlo Park, CA 94025 (US)
(72) Inventor: Tao, Min, Menlo Park (US); Cope, Alexander Randon, Menlo Park (US); Mudrick, Adam Alan, Menlo Park (US); Shen, Shizhe, Menlo Park (US)
(74) Representative: Murgitroyd & Company

(57) **Abstract**

Methods, systems, and storage media for guiding the design of facial expressions of an avatar in a virtual environment are disclosed. Exemplary implementations may: receive a response from a user to a personality questionnaire including one or more questions; generate a personality mask based on the response; assign the generated personality mask to an avatar of the user; identify emotional cues based on actions of the user; and render the avatar with emotions based on the assigned personality mask and the identified emotional cues.

## Description

### TECHNICAL FIELD

The present disclosure generally relates to virtual reality technology, and more particularly to the use of personality masks for enhancing social presence in virtual reality avatars.

### BACKGROUND

Conventionally, artificial reality, extended reality, or extra reality (collectively "XR") is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality.

One of the key aspects of artificial reality technology is the use of digital representations of users within the environment. These representations can be customized to resemble the user or take on entirely different appearances. However, a significant challenge in this technology is the ability to accurately represent a user's emotions and personality through their digital representation. Traditional methods have relied on tracking technologies to capture and render a user's facial expressions onto their digital representation. However, these methods can be costly, complex, and raise privacy concerns as they require continuous monitoring and tracking of the user's physical features.

### BRIEF SUMMARY

The subject disclosure provides for systems and methods for use of personality masks for enhancing social presence in virtual reality avatars. A user is allowed to personalize their avatar in a virtual environment using a personality mask generated from a personality test. For example, the personality mask can guide the design of the avatar's facial expressions, movements, and even clothing, providing a more natural and adaptive representation of the user in the virtual space.

One aspect of the present disclosure relates to a method for guiding the design of facial expressions of an avatar in a virtual environment. The method may be a computer-implemented method. The method may include receiving a response from a user to a personality questionnaire including one or more questions. The method may include generating a personality mask based on the response. The method may include assigning the generated personality mask to an avatar of the user. The method may include identifying emotional cues based on actions of the user. The method may include rendering the avatar with emotions based on the assigned personality mask and the identified emotional cues.

In some embodiments, the personality questionnaire includes a behavioral question.

In some embodiments, rendering the avatar with the emotions includes rendering eye movements of the avatar in accordance with the emotions.

In some embodiments, the method further comprises adjusting an appearance of the avatar based on the assigned personality mask, wherein adjusting the appearance comprises adjusting clothing of the avatar.

In some embodiments, the method further comprises providing an option for the user to purchase an additional personality mask.

In some embodiments, the method further comprises automatically changing at least one of an appearance, clothing, and facial expressions of the avatar based on a social setting in a virtual environment.

In some embodiments, the method further comprises automatically changing at least one of an appearance, clothing, and facial expressions of the avatar based on a social setting in a virtual environment.

In some embodiments, the personality mask is used to make an automatic adjustment to the avatar based on an action, location, or interaction of the user within a virtual environment.

In some embodiments, the personality mask is used to automatically change an appearance, clothing, or facial expression of the avatar based on a social setting in a virtual environment.

In some embodiments, the personality mask is used to adjust a position of the avatar in a virtual space.

Another aspect of the present disclosure relates to a system configured for guiding the design of facial expressions of an avatar in a virtual environment. The system may include one or more hardware processors configured by machine-readable instructions. The processor(s) may be configured to receive a response from a user to a personality questionnaire including one or more questions. The processor(s) may be configured to generate a personality mask based on the response. The processor(s) may be configured to assign the generated personality mask to an avatar of the user. The processor(s) may be configured to identify emotional cues based on actions of the user. The processor(s) may be configured to render the avatar with emotions based on the assigned personality mask and the identified emotional cues.

In some embodiments, the personality questionnaire includes a behavioral question.

In some embodiments, the processor(s) may be configured to render the avatar with the emotions includes rendering eye movements of the avatar in accordance with the emotions.

In some embodiments, the processor(s) may be further configured to adjust an appearance of the avatar based on the assigned personality mask, wherein adjusting the appearance comprises adjusting clothing of the avatar.

In some embodiments, the processor(s) may be further configured to provide an option for the user to purchase an additional personality mask.

In some embodiments, the processor(s) may be further configured to automatically change at least one of an appearance, clothing, and facial expressions of the avatar based on a social setting in a virtual environment.

In some embodiments, the processor(s) may be further configured to make an automatic adjustment to the avatar based on an action, location, or interaction of the user within a virtual environment.

In some embodiments, the personality mask is used to make an automatic adjustment to the avatar based on an action, location, or interaction of the user within a virtual environment.

In some embodiments, the personality mask is used to automatically change an appearance, clothing, or facial expression of the avatar based on a social setting in a virtual environment.

some embodiments, the personality mask is used to adjust a position of the avatar in a virtual space.

Yet another aspect of the present disclosure relates to a non-transient computer-readable storage medium having instructions embodied thereon, the instructions being executable by one or more processors to perform a method for guiding the design of facial expressions of an avatar in a virtual environment. The method may include receiving a response from a user to a personality questionnaire including one or more questions. The method may include generating a personality mask based on the response. The method may include assigning the generated personality mask to an avatar of the user. The method may include identifying emotional cues based on actions of the user. The method may include rendering the avatar with emotions based on the assigned personality mask and the identified emotional cues.

For example, this aspect of the present disclosure relates to a non-transient computer-readable storage medium having instructions embodied thereon, the instructions being executable by one or more processors to perform the computer-implemented method of the first aspect of the invention described hereinabove.

Still another aspect of the present disclosure relates to a system configured for guiding the design of facial expressions of an avatar in a virtual environment. The system may include means for receiving a response from a user to a personality questionnaire including one or more questions. The system may include means for generating a personality mask based on the response. The system may include means for assigning the generated personality mask to an avatar of the user. The system may include means for identifying emotional cues based on actions of the user. The system may include means for rendering the avatar with emotions based on the assigned personality mask and the identified emotional cues.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a block diagram illustrating an overview of devices on which some implementations of the disclosed technology can operate.
FIG. 2A is a wire diagram of a virtual reality head-mounted display (HMD), in accordance with one or more implementations.
FIG. 2B is a wire diagram of a mixed reality HMD system which includes a mixed reality HMD and a core processing component, in accordance with one or more implementations.
FIG. 2C illustrates controllers that a user can hold in one or both hands to interact with an artificial reality environment presented by the HMDs of FIGS. 2A and 2B, in accordance with one or more implementations.
FIG. 3 is a block diagram illustrating an overview of an environment in which some implementations of the disclosed technology can operate.
FIG. 4 illustrates an example flow diagram for personality mask rendering from machine learning model training, in accordance with one or more implementations.
FIG. 5 illustrates an example flow diagram for personality mask rendering from GenAI, in accordance with one or more implementations.
FIG. 6 illustrates an example flow diagram for avatar rendering in VR through a user defined "personality mask" from realistic personality tests, in accordance with one or more implementations.
FIG. 7 illustrates an example flow diagram for avatar rendering in VR through a "personality mask" captured from users through eye tracking/face tracking measurement, in accordance with one or more implementations.
FIG. 8 illustrates a system configured for providing personality masks for VR avatars, in accordance with one or more implementations.
FIG. 9 illustrates an example flow diagram for providing personality masks for VR avatars, according to certain aspects of the disclosure.
FIG. 10 is a block diagram illustrating an example computer system (e.g., representing both client and server) with which aspects of the subject technology can be implemented.

In one or more implementations, not all of the depicted components in each figure may be required, and one or more implementations may include additional components not shown in a figure. Variations in the arrangement and type of the components may be made without departing from the scope of the subject disclosure. Additional components, different components, or fewer components may be utilized within the scope of the subject disclosure.

### DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

Embodiments of the disclosed technology may include or be implemented in conjunction with an artificial reality system. Artificial reality, extended reality, or extra reality (collectively "XR") is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some implementations, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. AR also refers to systems where light entering a user's eye is partially generated by a computing system and partially composes light reflected off objects in the real world. For example, an AR headset could be shaped as a pair of glasses with a pass-through display, which allows light from the real world to pass through a waveguide that simultaneously emits light from a projector in the AR headset, allowing the AR headset to present virtual objects intermixed with the real objects the user can see. The AR headset may be a block-light headset with video pass-through. "Artificial reality," "extra reality," or "XR," as used herein, refers to any of VR, AR, MR, or any combination or hybrid thereof.

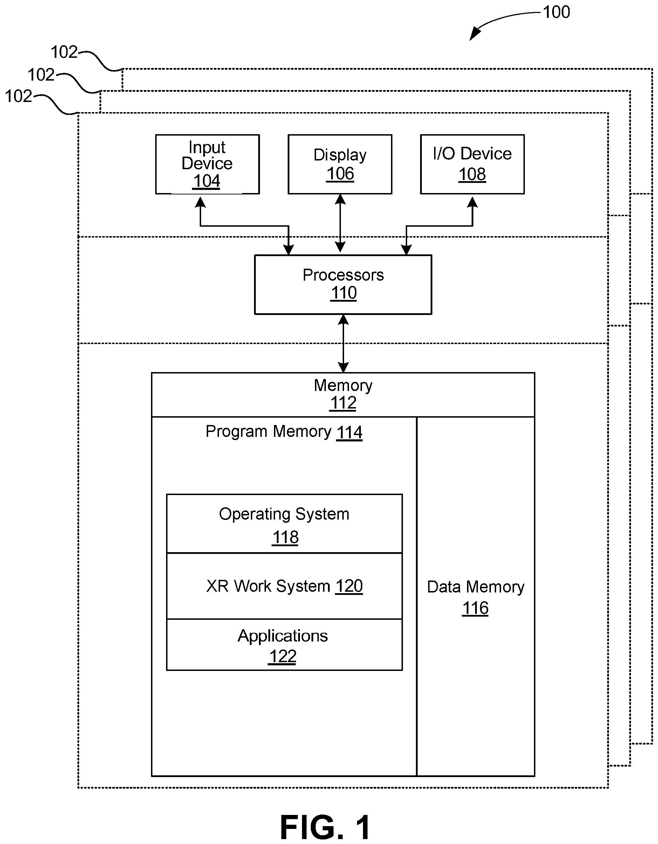

Several implementations are discussed below in more detail in reference to the figures. FIG. 1 is a block diagram of a device operating environment 100 with which aspects of the subject technology can be implemented. The device operating environment can comprise hardware components of a computing system 100 that can create, administer, and provide interaction modes for a shared artificial reality environment (e.g., gaming artificial reality environment) such as for individual control of audio (e.g., switching audio sources) via XR elements and/or real-world audio elements. The interaction modes can include different audio sources or channels for each user of the computing system 100. Some of these audio channels may be spatialized or non-spatialized. In various implementations, the computing system 100 can include a single computing device or multiple computing devices 102 that communicate over wired or wireless channels to distribute processing and share input data.

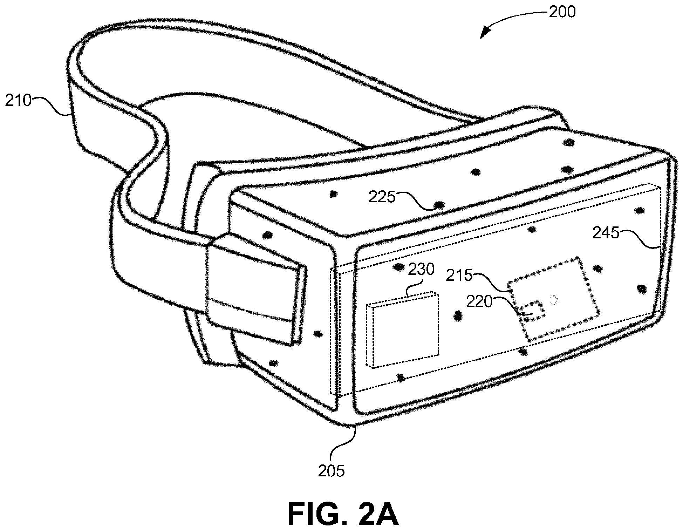

In some implementations, the computing system 100 can include a stand-alone headset capable of providing a computer created or augmented experience for a user without the need for external processing or sensors. In other implementations, the computing system 100 can include multiple computing devices 102 such as a headset and a core processing component (such as a console, mobile device, or server system) where some processing operations are performed on the headset and others are offloaded to the core processing component. Example headsets are described below in relation to FIGS. 2A-2B. In some implementations, position and environment data can be gathered only by sensors incorporated in the headset device, while in other implementations one or more of the non-headset computing devices 102 can include sensor components that can track environment or position data, such as for implementing computer vision functionality. Additionally or alternatively, such sensors can be incorporated as wrist sensors, which can function as a wrist wearable for detecting or determining user input gestures. For example, the sensors may include inertial measurement units (IMUs), eye tracking sensors, electromyography (e.g., for translating neuromuscular signals to specific gestures), time of flight sensors, light/optical sensors, and/or the like to determine the input gestures, how user hands/wrists are moving, and/or environment and position data.

The computing system 100 can include one or more processor(s) 110 (e.g., central processing units (CPUs), graphical processing units (GPUs), holographic processing units (HPUs), etc.) The processors 110 can be a single processing unit or multiple processing units in a device or distributed across multiple devices (e.g., distributed across two or more of computing device 102). The computing system 100 can include one or more input devices 104 that provide input to the processors 110, notifying them of actions. The actions can be mediated by a hardware controller that interprets the signals received from the input device 104 and communicates the information to the processors 110 using a communication protocol. As an example, the hardware controller can translate signals from the input devices 104 to render audio, motion, or other signal controlled features in the shared XR environment. Each input device 104 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, and/or other user input devices.

The processors 110 can be coupled to other hardware devices, for example, with the use of an internal or external bus, such as a PCI bus, SCSI bus, wireless connection, and/or the like. The processors 110 can communicate with a hardware controller for devices, such as for a display 106. The display 106 can be used to display text and graphics. In some implementations, the display 106 includes the input device as part of the display, such as when the input device is a touchscreen or is equipped with an eye direction monitoring system. In some implementations, the display is separate from the input device. Examples of display devices include an LCD display screen, an LED display screen, a projected, holographic, or augmented reality display (such as a heads-up display device or a head-mounted device), and/or the like. Other I/O devices 108 can also be coupled to the processor, such as a network chip or card, video chip or card, audio chip or card, USB, firewire or other external device, camera, printer, speakers, CD-ROM drive, DVD drive, disk drive, etc.

The computing system 100 can include a communication device capable of communicating wirelessly or wire-based with other local computing devices 102 or a network node. The communication device can communicate with another device or a server through a network using, for example, TCP/IP protocols. The computing system 100 can utilize the communication device to distribute operations across multiple network devices. For example, the communication device can function as a communication module. The communication device can be configured to transmit or receive audio signals.

The processors 110 can have access to a memory 112, which can be contained on one of the computing devices 102 of the computing system 100 or can be distributed across one of the multiple computing devices 102 of the computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. The memory 112 can include program memory 114 that stores programs and software, such as an operating system 118, XR work system 120, and other application programs 122 (e.g., XR games). The memory 112 can also include data memory 116 that can include information to be provided to the program memory 114 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, and/or the like.

FIGS. 2A-2B are diagrams illustrating virtual reality headsets, according to certain aspects of the present disclosure. FIG. 2A is a diagram of a virtual reality head-mounted display (HMD) 200. The HMD 200 includes a front rigid body 205 and a band 210. The front rigid body 205 includes one or more electronic display elements such as an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in a virtual environment in three degrees of freedom (3DoF), six degrees of freedom (6DoF), etc. For example, the locators 225 can emit infrared light beams which create light points on real objects around the HMD 200. As another example, the IMU 215 can include, e.g., one or more accelerometers, gyroscopes, magnetometers, other non-camera-based position, force, or orientation sensors, or combinations thereof. One or more cameras (not shown) integrated with the HMD 200 can detect the light points, such as for a computer vision algorithm or module. The compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof. The electronic display 245 can be coupled with an audio component, such as send and receive output from various other users of the XR environment wearing their own XR headsets, for example. The audio component can be configured to host multiple audio channels, sources, or modes.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

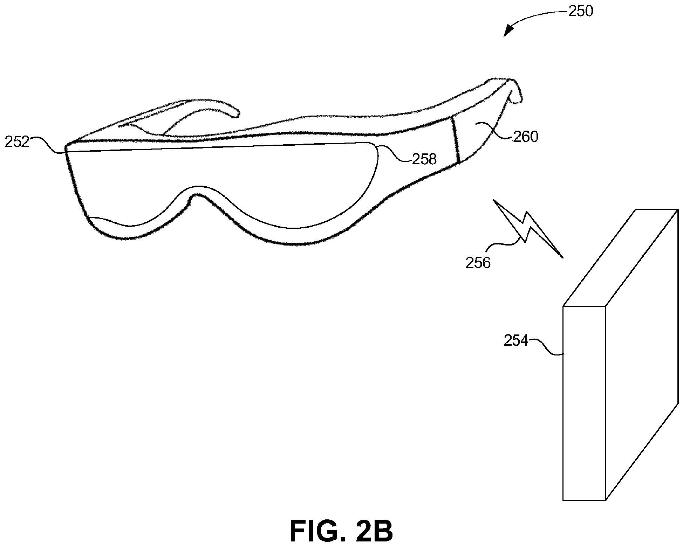

FIG. 2B is a diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by the link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc. The frame 260 or another part of the mixed reality HMD 252 may include an audio electronic component such as a speaker. The speaker can output audio from various audio sources, such as a phone call, VoIP session, or other audio channel. The electronic components may be configured to implement audio switching based on user gaming or XR interactions.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects. For example, the HMD system 250 can track the motion and position of user's wrist movements as input gestures for performing XR navigation. As an example, the HMD system 250 may include a coordinate system to track the relative positions of various XR objects and elements in a shared artificial reality environment.

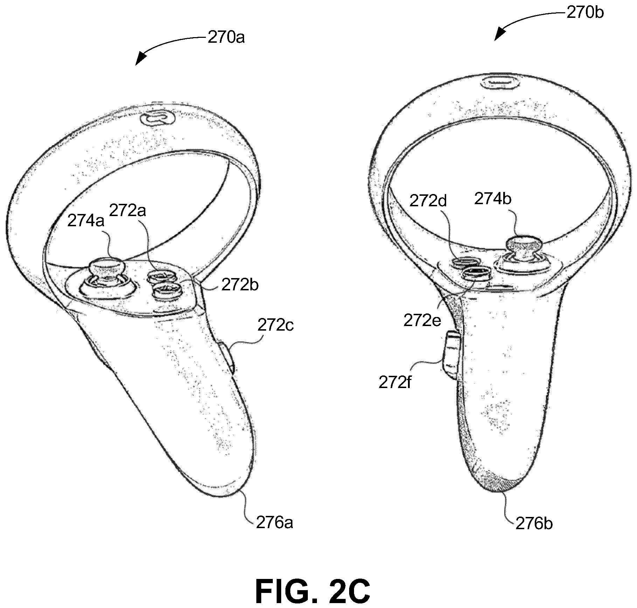

FIG. 2C illustrates controllers 270a-270b, which, in some implementations, a user can hold in one or both hands to interact with an artificial reality environment presented by the HMD 200 and/or HMD 250. The controllers 270a-270b can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. For example, the compute units 230 can use the monitored hand positions to implement navigation and scrolling via the hand positions and motions of the user, such as to enable a high fiving motion in XR.

The controllers 270a-270b can also include various buttons (e.g., buttons 272a-f) and/or joysticks (e.g., joysticks 274a-b), which a user can actuate to provide input and interact with objects. As discussed below, controllers 270a-270b can also have tips 276a and 276b, which, when in scribe controller mode, can be used as the tip of a writing implement in the artificial reality environment. In various implementations, the HMD 200 or 250 can also include additional subsystems, such as a hand tracking unit, an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. Such camera-based hand tracking can be referred to as computer vision, for example. Sensing subsystems of the HMD 200 or 250 can be used to define motion (e.g., user hand/wrist motion) along an axis (e.g., three different axes).

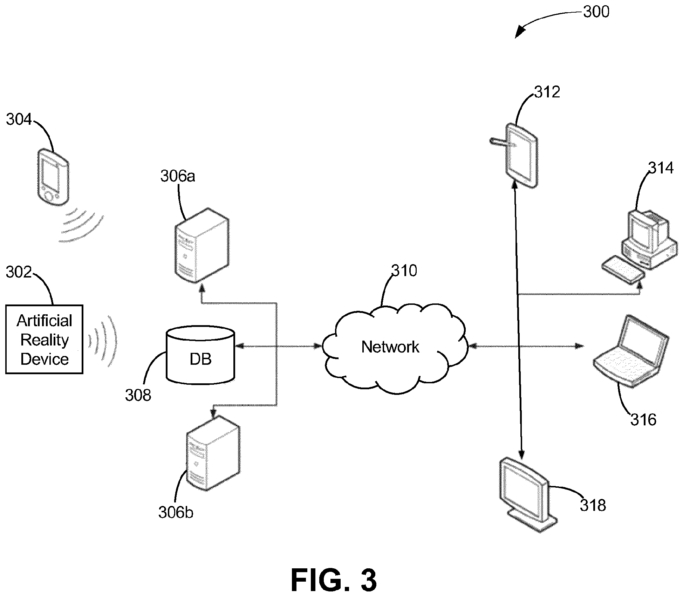

FIG. 3 is a block diagram illustrating an overview of an environment 300 in which some implementations of the disclosed technology can operate. The environment 300 can include one or more client computing devices, such as artificial reality device 302, mobile device 304, tablet 312, personal computer 314, laptop 316, desktop 318, and/or the like. The artificial reality device 302 may be the HMD 200, HMD system 250, a wrist wearable, or some other XR device that is compatible with rendering or interacting with an artificial reality or virtual reality environment. The artificial reality device 302 and mobile device 304 may communicate wirelessly via the network 310. In some implementations, some of the client computing devices can be the HMD 200 or the HMD system 250. The client computing devices can operate in a networked environment using logical connections through network 310 to one or more remote computers, such as a server computing device.

In some implementations, the environment 300 may include a server such as an edge server which receives client requests and coordinates fulfillment of those requests through other servers. The server may include server computing devices 306a-306b, which may logically form a single server. Alternatively, the server computing devices 306a-306b may each be a distributed computing environment encompassing multiple computing devices located at the same or at geographically disparate physical locations. The client computing devices and server computing devices 306a-306b can each act as a server or client to other server/client device(s).

The server computing devices 306a-306b can connect to a database 308 or can comprise its own memory. Each server computing devices 306a-306b can correspond to a group of servers, and each of these servers can share a database or can have their own database. The database 308 may logically form a single unit or may be part of a distributed computing environment encompassing multiple computing devices that are located within their corresponding server, located at the same, or located at geographically disparate physical locations.

The network 310 can be a local area network (LAN), a wide area network (WAN), a mesh network, a hybrid network, or other wired or wireless networks. The network 310 may be the Internet or some other public or private network. Client computing devices can be connected to network 310 through a network interface, such as by wired or wireless communication. The connections can be any kind of local, wide area, wired, or wireless network, including the network 310 or a separate public or private network. In some implementations, the server computing devices 306a-306b can be used as part of a social network such as implemented via the network 310. The social network can maintain a social graph and perform various actions based on the social graph. A social graph can include a set of nodes (representing social networking system objects, also known as social objects) interconnected by edges (representing interactions, activity, or relatedness). A social networking system object can be a social networking system user, nonperson entity, content item, group, social networking system page, location, application, subject, concept representation or other social networking system object, e.g., a movie, a band, a book, etc.

The traditional methods of enhancing social presence in a virtual environment, such as camera-based eye and face tracking technologies, may have several limitations. These methods may be costly to implement and complex in their system design. Furthermore, they may raise potential privacy concerns as they may require continuous monitoring and tracking of the user's physical features. Users may feel uncomfortable with the idea of being constantly "tracked," and this could potentially lead to other issues in the future. Additionally, these methods may add computational latency, which can negatively impact the user's virtual experience.

The subject disclosure provides for systems and methods for use of personality masks for enhancing social presence in virtual reality avatars. A user is allowed to personalize their avatar in a virtual environment using a personality mask generated from a personality test. For example, the personality mask can guide the design of the avatar's facial expressions, movements, and even clothing, providing a more natural and adaptive representation of the user in the virtual space.

Implementations described herein address the aforementioned shortcomings and other shortcomings by providing a feature referred to as "Personality Masks" on digital representations of users in a virtual environment. These masks may be generated based on a user's responses to a personality questionnaire and may be assigned to the user's digital representation. The personality mask may then be used to render the digital representation's emotions based on the user's actions, without the need for continuous eye or face tracking. This approach may not only reduce the hardware cost and computational latency associated with traditional methods, but also may address privacy concerns by eliminating the need for continuous tracking of the user's physical features. Furthermore, some implementations are designed to be adaptive, learning from the user's interactions and adjusting the digital representation's behavior accordingly.

In some implementations, a user's personality and expressions may be used to guide the design of an avatar's facial expressions in a virtual environment. This could mean that the avatar may mimic the user's real-life expressions, creating a more personalized virtual experience. For instance, if a user is generally cheerful, their avatar may often be seen smiling in the virtual environment. This could be achieved through the use of personality masks, which may be generated based on a personality test taken by the user. The personality test may include a series of questions designed to understand the user's character traits and emotional tendencies. For example, it may ask about the user's reactions to certain situations, which could help predict their likely facial expressions. As a non-limiting example, embodiments may leverage available personality tests (e.g., Myers-Briggs Type Indicator (MBTI) test, etc.).

The personality test may predict behavior patterns in the real world and incorporate that into the personality mask, which may then be portrayed in the virtual space. This could mean that the avatar may behave in a way that is consistent with the user's real-world behavior. For instance, if the personality test indicates that the user is introverted, their avatar may be less likely to initiate interactions in the virtual environment. This approach could provide a more realistic and social aspect to virtual reality, as it does not rely on cameras or eye tracking to display visual expressions. This could mean that the user's privacy may be better protected, as their physical movements are not being constantly monitored. For example, the user may feel more comfortable knowing that their eye movements are not being tracked and analyzed.

These implementations may be used in conjunction with eye tracking, face tracking, or other sensors available on the virtual reality or augmented reality device or application. This could mean that the avatar's expressions may be even more accurate and realistic. For example, if the user is surprised, the avatar's eyes may widen just as the user's do. However, in some cases, when these features are not available or the user opts out of using them, the personality test alone may be used to generate a mask for the avatar. This could mean that the avatar's expressions may still be personalized, even without the use of additional sensors. For instance, the avatar may still smile when the user is happy, based solely on the results of the personality test.

The mask may be based on the user's personality or another personality. This could mean that the user may choose to have their avatar behave in a way that is different from their own behavior. For example, a shy user may choose a mask that makes their avatar more outgoing. This could provide a more personalized and immersive experience for the user in the virtual space. This could mean that the user may feel more engaged and invested in the virtual environment. For instance, they may enjoy seeing their avatar interact with others in a way that they themselves might not.

Based on the personality mask, a set of facial expressions may be assigned to the avatar. This could mean that the avatar may have a range of expressions that are consistent with the chosen personality. For example, an avatar with a cheerful personality mask may often be seen smiling or laughing. This could provide very natural and changing facial expressions in the virtual space, enhancing the realism of the avatar. This could mean that the avatar may seem more lifelike and relatable. For instance, other users in the virtual environment may feel more connected to an avatar that displays realistic emotions.

Based on the personality mask, a set of body expressions may be assigned to the avatar. This could mean that the avatar may have a range of body expressions that are consistent with the chosen personality. Some non-limiting examples of body expressions that may be assigned to the avatar include gait, posture, body language, hand gestures, and the like. In one embodiment, a set of body expressions may be assigned a title or label for a user to select, for example "martial artist" or "shy bookish type".

In some implementations, the personality masks may also be associated with a look or aesthetic. This could mean that the avatar's appearance may be influenced by the chosen personality. For example, an avatar with a bold personality mask may have a vibrant and daring look. For example, a bubbly person may be represented by an avatar dressed in colorful and bright clothing, who smiles regularly and looks happy. This could mean that the avatar's appearance may reflect their personality, making them more visually appealing. For instance, an avatar with a creative personality mask may have a unique and artistic look.

Personality masks may also be purchased, similar to merchandise, clothing, costumes, etc., via the virtual reality application. This could mean that users may have the option to select masks that represent different personalities. For example, a user may choose to buy a confident personality mask for a job interview simulation. This could provide users with a wider range of options for personalizing their avatars. This could mean that users may have more control over their avatars' behavior and appearance. For instance, a user may choose a mask that makes their avatar more assertive for a competitive game.

In some implementations, sets of looks or facial expressions, or even changes to the avatar's clothing, may be generated automatically based on the social settings in the virtual space. This could mean that the avatar's appearance may adapt to different situations. For example, the avatar may dress more formally for a business meeting and more casually for a virtual party. This could provide a more dynamic and responsive virtual experience for the user. This could mean that the user may feel more immersed in the virtual environment, as their avatar responds to changes in the same way they would.

In some implementations, the user may make manual adjustments to the personality mask. This could mean that the user may have the option to tweak the mask to better suit their preferences. For example, they may choose to make their avatar more expressive or more reserved. However, the system may also be adaptive and automatically make adjustments to an avatar based on the user, their environment in the virtual space, things the user is saying in the virtual space, where the user is going, and what the user is doing. This could mean that the avatar may change in response to the user's actions. For example, if the user is talking about a sad topic, the avatar may look sympathetic.

To protect the user's privacy, personal information may be safeguarded and encrypted. This could mean that the user's data may be stored in a secure manner, reducing the risk of unauthorized access. For example, the results of the personality test may be encrypted before being stored. This could remove some of the computational latency, as tracking measurements based on all sensors could add additional time in the loop. This could mean that the system may operate more efficiently, as it does not need to process large amounts of sensor data. For example, the system may respond more quickly to the user's actions without the need to analyze eye tracking data. By removing this, the system could provide a more efficient and secure virtual experience for the user. This could mean that the user may enjoy a smoother and more responsive virtual experience, while also feeling confident that their personal information is protected.

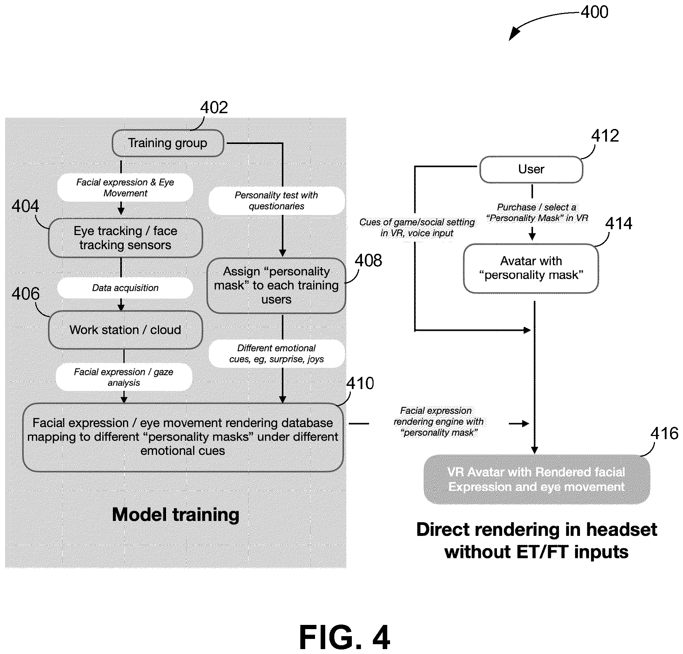

FIG. 4 illustrates an example flow diagram (e.g., process 400) for personality mask rendering from machine learning model training, in accordance with one or more implementations. At step 402, a training group may be identified. The training group may include multiple individuals. At step 404, sensors may be used to track facial expression and/or eye movement of individuals in the training group. At step 406, data from the sensors may be acquired by a workstation and/or cloud resources. At step 408, personality masks may be assigned to individuals in the training group based on personality tests with questionnaires. At step 410, different personality masks may be mapped under different emotional cues based on facial expression and/or gaze analysis and results of the personality tests. At step 412, a user may provide cues related to a game and/or social setting with VR and/or voice input, or the user may purchase or select a personality mask in VR (see step 414). At step 416, a VR avatar associated with the user may be rendered with facial expression and eye movement based on the personality mask.

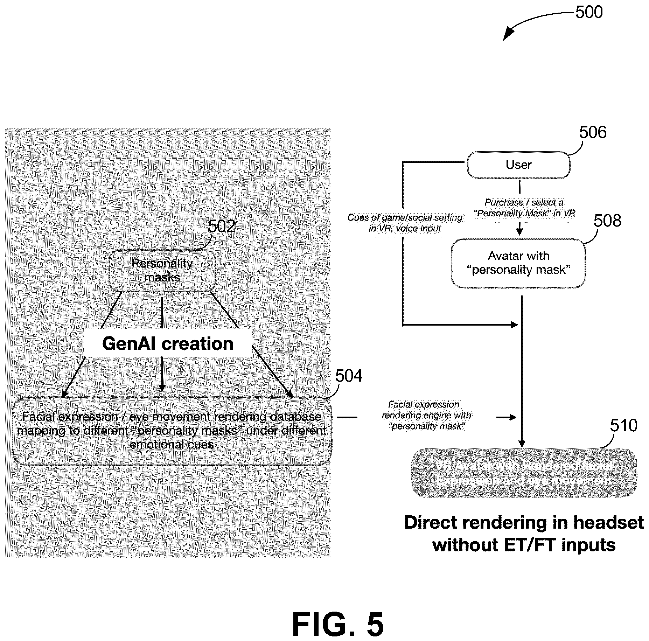

FIG. 5 illustrates an example flow diagram (e.g., process 500) for personality mask rendering from GenAI, in accordance with one or more implementations. At step 502, personality masks may be provided through generative artificial intelligence (GenAI). At step 504, a facial expression and/or eye movement rendering database may be mapped to different personality masks under different emotional cues. At step 506, a user may provide cues related to a game and/or social setting with VR and/or voice input, or the user may purchase or select a personality mask in VR (see step 508). At step 510, a VR avatar associated with the user may be rendered with facial expression and eye movement based on the personality mask.

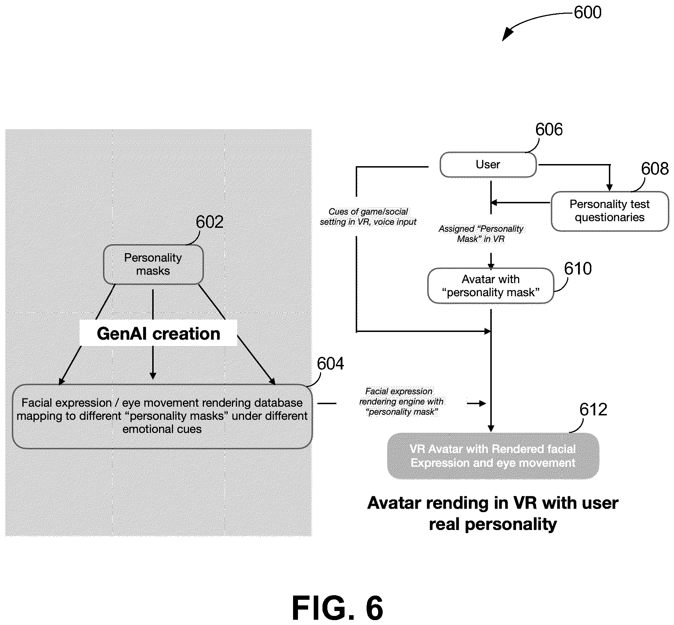

FIG. 6 illustrates an example flow diagram (e.g., process 600) for avatar rendering in VR through a user defined "personality mask" from realistic personality tests, in accordance with one or more implementations. At step 602, personality masks may be provided through generative artificial intelligence (GenAI). At step 604, a facial expression and/or eye movement rendering database may be mapped to different personality masks under different emotional cues. At step 606, a user may provide cues related to a game and/or social setting with VR and/or voice input, or the user performs one or more personality test questionnaires and/or other personality tests (see step 608). At step 610, a personality mask may be assigned in VR. At step 612, a VR avatar associated with the user may be rendered with facial expression and eye movement based on the personality mask.

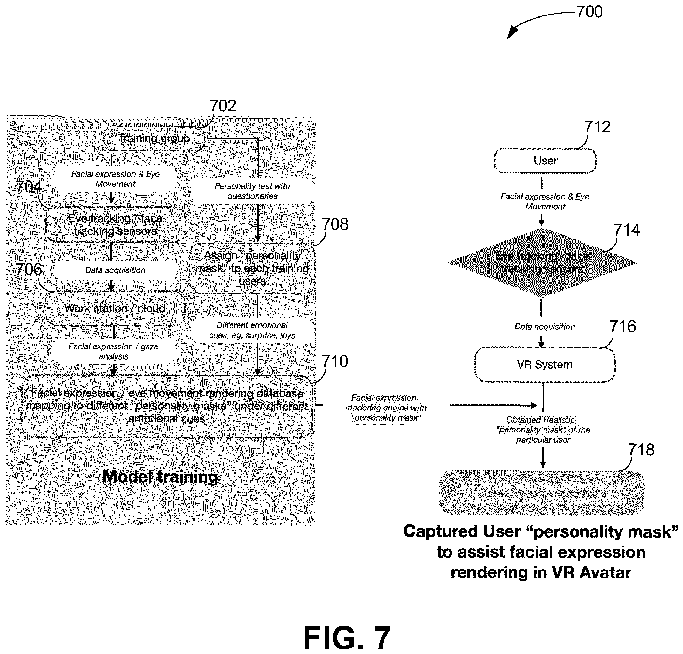

FIG. 7 illustrates an example flow diagram (e.g., process 700) for avatar rendering in VR through a "personality mask" captured from users through eye tracking/face tracking measurement, in accordance with one or more implementations. At step 702, a training group may be identified. The training group may include multiple individuals. At step 704, sensors may be used to track facial expression and/or eye movement of individuals in the training group. At step 706, data from the sensors may be acquired by a workstation and/or cloud resources. At step 708, personality masks may be assigned to individuals in the training group based on personality tests with questionnaires. At step 710, different personality masks may be mapped under different emotional cues based on facial expression and/or gaze analysis and results of the personality tests. At step 712, a user may provide a facial expression and/or eye movement. At step 714, sensors may measure the facial expressions and/or eye movement of the user. At step 716, information collected by the sensors may be provided to a VR system. At step 718, a VR avatar associated with the user may be rendered with facial expression and eye movement based on the personality mask.

The disclosed system(s) address a problem in traditional avatar presentation techniques tied to computer technology, namely, the technical problem(s) of expressing an individual's personality through their avatar (e.g., high cost and complexity of implementation, high compute bandwidth and power consumption, and privacy concerns associated with camera-based eye tracking and face tracking technologies). The disclosed system solves this technical problem by providing a solution also rooted in computer technology, namely, by providing for use of personality masks for enhancing social presence in virtual reality avatars. The disclosed subject technology further provides improvements to the functioning of the computer itself because it improves processing and efficiency in artificial reality applications.

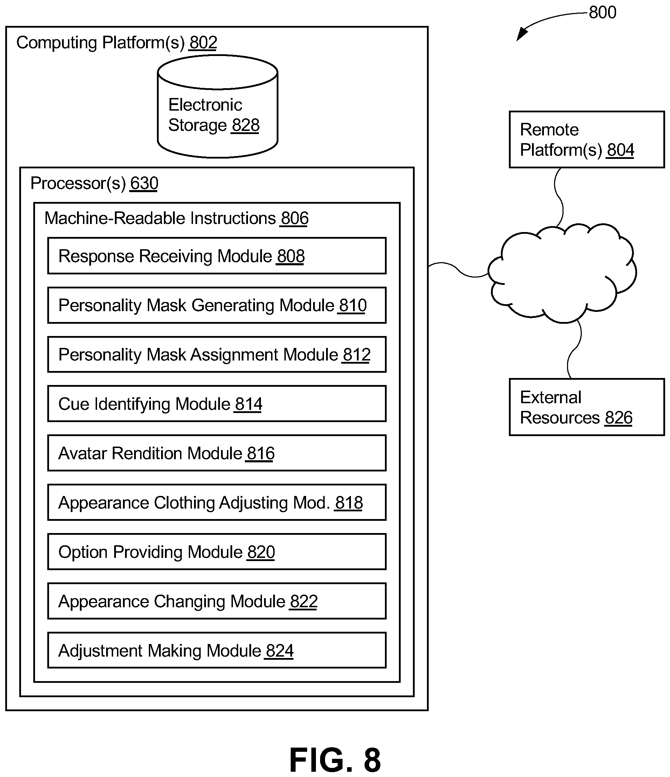

FIG. 8 illustrates a system 800 configured for providing personality masks for VR avatars, according to certain aspects of the disclosure. In some implementations, system 800 may include one or more computing platforms 802. Computing platform(s) 802 may be configured to communicate with one or more remote platforms 804 according to a client/server architecture, a peer-to-peer architecture, and/or other architectures. Remote platform(s) 804 may be configured to communicate with other remote platforms via computing platform(s) 802 and/or according to a client/server architecture, a peer-to-peer architecture, and/or other architectures. Users may access system 800 via remote platform(s) 804.

Computing platform(s) 802 may be configured by machine-readable instructions 806. Machine-readable instructions 806 may include one or more instruction modules. The instruction modules may include computer program modules. The instruction modules may include one or more of response receiving module 808, personality mask generating module 810, personality mask assignment module 812, cue identifying module 814, avatar rendition module 816, appearance clothing adjusting module 818, option providing module 820, appearance changing module 822, adjustment making module 824, and/or other instruction modules.

Response receiving module 808 may be configured to receive a response from a user to a personality questionnaire including one or more questions. The personality questionnaire may include behavioral questions.

Personality mask generating module 810 may be configured to generate a personality mask based on the response. By way of non-limiting example, the personality mask may be used to automatically change the avatar's appearance, clothing, and facial expressions based on the social settings in the virtual environment. The personality mask may be used to adjust the avatar's position in the virtual space. The personality mask may be used to change the user's verbal responses in real time. The personality mask may be used to modulate the avatar's voice, volume, and tone.

The personality mask may be used to adjust the avatar's facial expressions. The personality mask may be used to adjust the avatar's clothing and appearance. The personality mask may be used to simulate the user's movements in the virtual environment. The personality mask may be adjusted based on the user's recent activities and experiences.

Personality mask assignment module 812 may be configured to assign the generated personality mask to an avatar of the user. By way of non-limiting example, the personality mask may be used to make automatic adjustments to the avatar based on the user's actions, location, and interactions within the virtual environment.

Cue identifying module 814 may be configured to identify emotional cues based on actions of the user.

Avatar rendition module 816 may be configured to render the avatar with emotions based on the assigned personality mask and the identified emotional cues.

Avatar rendition module 816 may be configured to render the avatar with the emotions includes rendering eye movements of the avatar in accordance with the emotions.

Appearance clothing adjusting module 818 may be configured to adjust the appearance and clothing of the avatar based on the assigned personality mask.

Option providing module 820 may be configured to provide an option for the user to purchase additional personality masks.

Appearance changing module 822 may be configured to automatically change the appearance, clothing, and facial expressions of the avatar based on the social settings in the virtual environment.

Adjustment making module 824 may be configured to make automatic adjustments to the avatar based on the user's actions, location, and interactions within the virtual environment.

In some implementations, computing platform(s) 802, remote platform(s) 804, and/or external resources 826 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which computing platform(s) 802, remote platform(s) 804, and/or external resources 826 may be operatively linked via some other communication media.

A given remote platform 804 may include one or more processors configured to execute computer program modules. The computer program modules may be configured to enable an expert or user associated with the given remote platform 804 to interface with system 800 and/or external resources 826, and/or provide other functionality attributed herein to remote platform(s) 804. By way of non-limiting example, a given remote platform 804 and/or a given computing platform 802 may include one or more of a server, a desktop computer, a laptop computer, a handheld computer, a tablet computing platform, a NetBook, a Smartphone, a gaming console, and/or other computing platforms.

External resources 826 may include sources of information outside of system 800, external entities participating with system 800, and/or other resources. In some implementations, some or all of the functionality attributed herein to external resources 826 may be provided by resources included in system 800.

Computing platform(s) 802 may include electronic storage 828, one or more processors 630, and/or other components. Computing platform(s) 802 may include communication lines, or ports to enable the exchange of information with a network and/or other computing platforms. Illustration of computing platform(s) 802 in FIG. 8 is not intended to be limiting. Computing platform(s) 802 may include a plurality of hardware, software, and/or firmware components operating together to provide the functionality attributed herein to computing platform(s) 802. For example, computing platform(s) 802 may be implemented by a cloud of computing platforms operating together as computing platform(s) 802.

Electronic storage 828 may comprise non-transitory storage media that electronically stores information. The electronic storage media of electronic storage 828 may include one or both of system storage that is provided integrally (i.e., substantially non-removable) with computing platform(s) 802 and/or removable storage that is removably connectable to computing platform(s) 802 via, for example, a port (e.g., a USB port, a firewire port, etc.) or a drive (e.g., a disk drive, etc.). Electronic storage 828 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 828 may include one or more virtual storage resources (e.g., cloud storage, a virtual private network, and/or other virtual storage resources). Electronic storage 828 may store software algorithms, information determined by processor(s) 630, information received from computing platform(s) 802, information received from remote platform(s) 804, and/or other information that enables computing platform(s) 802 to function as described herein.

Processor(s) 630 may be configured to provide information processing capabilities in computing platform(s) 802. As such, processor(s) 630 may include one or more of a digital processor, an analog processor, a digital circuit designed to process information, an analog circuit designed to process information, a state machine, and/or other mechanisms for electronically processing information. Although processor(s) 630 is shown in FIG. 8 as a single entity, this is for illustrative purposes only. In some implementations, processor(s) 630 may include a plurality of processing units. These processing units may be physically located within the same device, or processor(s) 630 may represent processing functionality of a plurality of devices operating in coordination. Processor(s) 630 may be configured to execute modules 808, 810, 812, 814, 816, 818, 820, 822, and/or 824, and/or other modules. Processor(s) 630 may be configured to execute modules 808, 810, 812, 814, 816, 818, 820, 822, and/or 824, and/or other modules by software; hardware; firmware; some combination of software, hardware, and/or firmware; and/or other mechanisms for configuring processing capabilities on processor(s) 630. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although modules 808, 810, 812, 814, 816, 818, 820, 822, and/or 824 are illustrated in FIG. 8 as being implemented within a single processing unit, in implementations in which processor(s) 630 includes multiple processing units, one or more of modules 808, 810, 812, 814, 816, 818, 820, 822, and/or 824 may be implemented remotely from the other modules. The description of the functionality provided by the different modules 808, 810, 812, 814, 816, 818, 820, 822, and/or 824 described below is for illustrative purposes, and is not intended to be limiting, as any of modules 808, 810, 812, 814, 816, 818, 820, 822, and/or 824 may provide more or less functionality than is described. For example, one or more of modules 808, 810, 812, 814, 816, 818, 820, 822, and/or 824 may be eliminated, and some or all of its functionality may be provided by other ones of modules 808, 810, 812, 814, 816, 818, 820, 822, and/or 824. As another example, processor(s) 630 may be configured to execute one or more additional modules that may perform some or all of the functionality attributed below to one of modules 808, 810, 812, 814, 816, 818, 820, 822, and/or 824.

The techniques described herein may be implemented as method(s) that are performed by physical computing device(s); as one or more non-transitory computer-readable storage media storing instructions which, when executed by computing device(s), cause performance of the method(s); or, as physical computing device(s) that are specially configured with a combination of hardware and software that causes performance of the method(s).

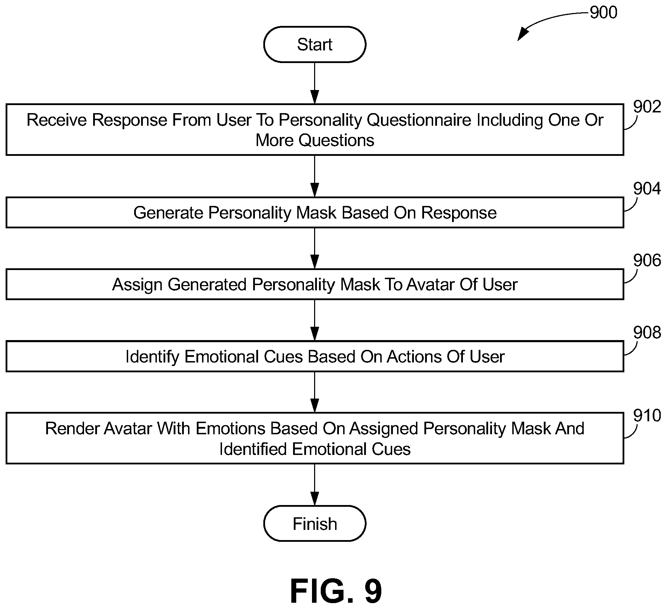

FIG. 9 illustrates an example flow diagram (e.g., process 900) for providing personality masks for VR avatars, according to certain aspects of the disclosure. For explanatory purposes, the example process 900 is described herein with reference to FIGS. 1-8. Further for explanatory purposes, the steps of the example process 900 are described herein as occurring in serial, or linearly. However, multiple instances of the example process 900 may occur in parallel. For purposes of explanation of the subject technology, the process 900 will be discussed in reference to FIGS. 1-8.

At step 902, the process 900 may include receiving a response from a user to a personality questionnaire including one or more questions. At step 904, the process 900 may include generating a personality mask based on the response. At step 906, the process 900 may include assigning the generated personality mask to an avatar of the user. At step 908, the process 900 may include identifying emotional cues based on actions of the user. At step 910, the process 900 may include rendering the avatar with emotions based on the assigned personality mask and the identified emotional cues.

For example, as described above in relation to FIG. 8, at step 902, the process 900 may include receiving a response from a user to a personality questionnaire including one or more questions, through response receiving module 808. At step 904, the process 900 may include generating a personality mask based on the response, through personality mask generating module 810. At step 906, the process 900 may include assigning the generated personality mask to an avatar of the user, through personality mask assignment module 812. At step 908, the process 900 may include identifying emotional cues based on actions of the user, through cue identifying module 814. At step 910, the process 900 may include rendering the avatar with emotions based on the assigned personality mask and the identified emotional cues, through avatar rendition module 816.

According to an aspect, the personality questionnaire includes behavioral questions.

According to an aspect, the process 900 may include rendering the avatar with the emotions includes rendering eye movements of the avatar in accordance with the emotions.

According to an aspect, the process 900 may include adjusting the appearance and clothing of the avatar based on the assigned personality mask.

According to an aspect, the process 900 may include providing an option for the user to purchase additional personality masks.

According to an aspect, the process 900 may include automatically changing the appearance, clothing, and facial expressions of the avatar based on the social settings in the virtual environment.

According to an aspect, the process 900 may include making automatic adjustments to the avatar based on the user's actions, location, and interactions within the virtual environment.

According to an aspect, the personality mask is used to make automatic adjustments to the avatar based on the user's actions, location, and interactions within the virtual environment.

According to an aspect, the personality mask is used to automatically change the avatar's appearance, clothing, and facial expressions based on the social settings in the virtual environment.

According to an aspect, the personality mask is used to adjust the avatar's position in the virtual space.

According to an aspect, the personality mask is used to change the user's verbal responses in real time.

According to an aspect, the personality mask is used to modulate the avatar's voice volume and tone.

According to an aspect, the personality mask is used to adjust the avatar's facial expressions.

According to an aspect, the personality mask is used to adjust the avatar's clothing and appearance.

According to an aspect, the personality mask is used to simulate the user's movements in the virtual environment.

According to an aspect, the personality mask is adjusted based on the user's recent activities and experiences.

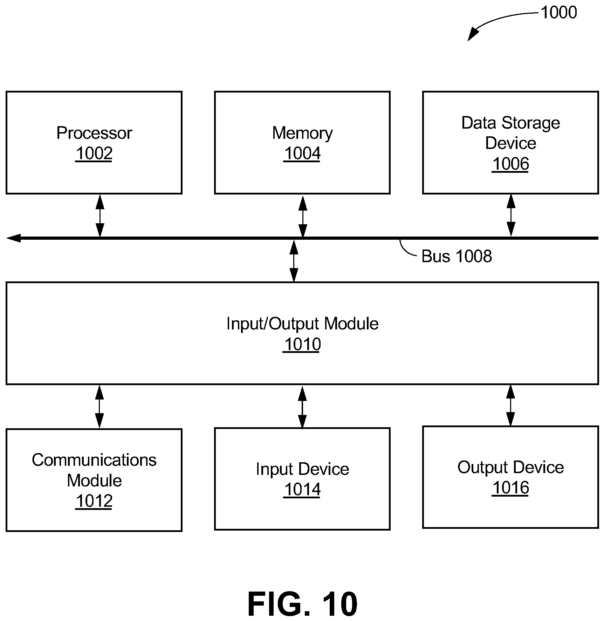

FIG. 10 is a block diagram illustrating an exemplary computer system 1000 with which aspects of the subject technology can be implemented. In certain aspects, the computer system 1000 may be implemented using hardware or a combination of software and hardware, either in a dedicated server, integrated into another entity, or distributed across multiple entities.

Computer system 1000 (e.g., server and/or client) includes a bus 1008 or other communication mechanism for communicating information, and a processor 1002 coupled with bus 1008 for processing information. By way of example, the computer system 1000 may be implemented with one or more processors 1002. Processor 1002 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 1000 can include, in addition to hardware, code that creates an execution environment for the computer program in question, e.g., code that constitutes processor firmware, a protocol stack, a database management system, an operating system, or a combination of one or more of them stored in an included memory 1004, such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled to bus 1008 for storing information and instructions to be executed by processor 1002. The processor 1002 and the memory 1004 can be supplemented by, or incorporated in, special purpose logic circuitry.

The instructions may be stored in the memory 1004 and implemented in one or more computer program products, i.e., one or more modules of computer program instructions encoded on a computer-readable medium for execution by, or to control the operation of, the computer system 1000, and according to any method well-known to those of skill in the art, including, but not limited to, computer languages such as data-oriented languages (e.g., SQL, dBase), system languages (e.g., C, Objective-C, C++, Assembly), architectural languages (e.g., Java, .NET), and application languages (e.g., PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, off-side rule languages, procedural languages, reflective languages, rule-based languages, scripting languages, stack-based languages, synchronous languages, syntax handling languages, visual languages, wirth languages, and xml-based languages. Memory 1004 may also be used for storing temporary variable or other intermediate information during execution of instructions to be executed by processor 1002.

A computer program as discussed herein does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 1000 further includes a data storage device 1006 such as a magnetic disk or optical disk, coupled to bus 1008 for storing information and instructions. Computer system 1000 may be coupled via input/output module 1010 to various devices. The input/output module 1010 can be any input/output module. Exemplary input/output modules 1010 include data ports such as USB ports. The input/output module 1010 is configured to connect to a communications module 1012. Exemplary communications modules 1012 include networking interface cards, such as Ethernet cards and modems. In certain aspects, the input/output module 1010 is configured to connect to a plurality of devices, such as an input device 1014 and/or an output device 1016. Exemplary input devices 1014 include a keyboard and a pointing device, e.g., a mouse or a trackball, by which a user can provide input to the computer system 1000. Other kinds of input devices 1014 can be used to provide for interaction with a user as well, such as a tactile input device, visual input device, audio input device, or brain-computer interface device. For example, feedback provided to the user can be any form of sensory feedback, e.g., visual feedback, auditory feedback, or tactile feedback, and input from the user can be received in any form, including acoustic, speech, tactile, or brain wave input. Exemplary output devices 1016 include display devices such as an LCD (liquid crystal display) monitor, for displaying information to the user.

According to one aspect of the present disclosure, the above-described gaming systems can be implemented using a computer system 1000 in response to processor 1002 executing one or more sequences of one or more instructions contained in memory 1004. Such instructions may be read into memory 1004 from another machine-readable medium, such as data storage device 1006. Execution of the sequences of instructions contained in the main memory 1004 causes processor 1002 to perform the process steps described herein. One or more processors in a multi-processing arrangement may also be employed to execute the sequences of instructions contained in memory 1004. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, e.g., such as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. The communication network can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computer system 1000 can include clients and servers. A client and server are generally remote from each other and typically interact through a communication network. The relationship of client and server arises by virtue of computer programs running on the respective computers and having a client-server relationship to each other. Computer system 1000 can be, for example, and without limitation, a desktop computer, laptop computer, or tablet computer. Computer system 1000 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 1002 for execution. Such a medium may take many forms, including, but not limited to, non-volatile media, volatile media, and transmission media. Non-volatile media include, for example, optical or magnetic disks, such as data storage device 1006. Volatile media include dynamic memory, such as memory 1004. Transmission media include coaxial cables, copper wire, and fiber optics, including the wires that comprise bus 1008. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter effecting a machine-readable propagated signal, or a combination of one or more of them.

As the user computing system 1000 reads game data and provides a game, information may be read from the game data and stored in a memory device, such as the memory 1004. Additionally, data from the memory 1004 servers accessed via a network the bus 1008, or the data storage 1006 may be read and loaded into the memory 1004. Although data is described as being found in the memory 1004, it will be understood that data does not have to be stored in the memory 1004 and may be stored in other memory accessible to the processor 1002 or distributed among several media, such as the data storage 1006.

As used herein, the phrase "at least one of" preceding a series of items, with the terms "and" or "or" to separate any of the items, modifies the list as a whole, rather than each member of the list (i.e., each item). The phrase "at least one of' does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

To the extent that the terms "include," "have," or the like is used in the description or the claims, such term is intended to be inclusive in a manner similar to the term "comprise" as "comprise" is interpreted when employed as a transitional word in a claim. The word "exemplary" is used herein to mean "serving as an example, instance, or illustration." Any embodiment described herein as "exemplary" is not necessarily to be construed as preferred or advantageous over other embodiments.

A reference to an element in the singular is not intended to mean "one and only one" unless specifically stated, but rather "one or more." All structural and functional equivalents to the elements of the various configurations described throughout this disclosure that are known or later come to be known to those of ordinary skill in the art are expressly incorporated herein by reference and intended to be encompassed by the subject technology. Moreover, nothing disclosed herein is intended to be dedicated to the public regardless of whether such disclosure is explicitly recited in the above description.

While this specification contains many specifics, these should not be construed as limitations on the scope of what may be claimed, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products. Other variations are within the scope of the following claims.

## Claims

1. A computer-implemented method comprising:
receiving a response from a user to a personality questionnaire including one or more questions;
generating a personality mask based on the response;
assigning the generated personality mask to an avatar of the user;
identifying emotional cues based on actions of the user; and
rendering the avatar with emotions based on the assigned personality mask and the identified emotional cues.

2. The method of claim 1, wherein the personality questionnaire includes a behavioral question.

3. The method of claim 1 or claim 2, wherein rendering the avatar with the emotions includes rendering eye movements of the avatar in accordance with the emotions.

4. The method of any preceding claim, further comprising adjusting an appearance of the avatar based on the assigned personality mask, wherein adjusting the appearance comprises adjusting clothing of the avatar.

5. The method of any preceding claim, further comprising providing an option for the user to purchase an additional personality mask.

6. The method of any preceding claim, further comprising automatically changing at least one of an appearance, clothing, and facial expressions of the avatar based on a social setting in a virtual environment, and optionally, wherein the personality mask is used to automatically change an appearance, clothing, or facial expression of the avatar based on a social setting in a virtual environment.

7. The method of any preceding claim, further comprising making an automatic adjustment to the avatar based on an action, location, or interaction of the user within a virtual environment, and optionally, wherein the personality mask is used to make an automatic adjustment to the avatar based on an action, location, or interaction of the user within a virtual environment.

8. The method of any preceding claim, wherein the personality mask is used to adjust a position of the avatar in a virtual space.

9. A system comprising:
one or more hardware processors configured by machine-readable instructions to:
receive a response from a user to a personality questionnaire including one or more questions;
generate a personality mask based on the response;
assign the generated personality mask to an avatar of the user;
identify emotional cues based on actions of the user; and
render the avatar with emotions based on the assigned personality mask and the identified emotional cues.

10. The system of claim 9, wherein the personality questionnaire includes a behavioral question.

11. The system of claim 9 or 10, wherein rendering the avatar with the emotions includes rendering eye movements of the avatar in accordance with the emotions.

12. The system of one of claims 9 to 11, wherein the one or more hardware processors are further configured by machine-readable instructions to adjust an appearance of the avatar based on the assigned personality mask, wherein adjusting the appearance comprises adjusting clothing of the avatar.

13. The system of one of claims 9 to 12, wherein the one or more hardware processors are further configured by machine-readable instructions to provide an option for the user to purchase an additional personality mask.

14. The system of one of claims 9 to 13, wherein the one or more hardware processors are further configured by machine-readable instructions to perform the method of any one of claims 6 to 8.

15. A non-transient computer-readable storage medium having instructions embodied thereon, the instructions being executable by one or more processors to perform a computer-implemented method comprising the method of any one of claims 1 to 10.
